# EUROPÄISCHE PATENTSCHRIFT

(11) **EP 2 709 962 B1**
(45) Veröffentlichungstag und Bekanntmachung des Hinweises auf die Patenterteilung: **05.04.2017**
(21) Anmeldenummer: 12726718.5
(22) Anmeldetag: 21.05.2012
(51) Int. Cl.: C04B 7/36

(54) **VERFAHREN UND VORRICHTUNG ZUR QUECKSILBERABSCHEIDUNG BEI DER ZEMENTKLINKERHERSTELLUNG**
METHOD AND DEVICE FOR REMOVING MERCURY DURING THE PRODUCTION OF CEMENT CLINKER
PROCÉDÉ ET DISPOSITIF POUR L'ÉLIMINATION DU MERCURE LORS DE LA PRÉPARATION DE CLINKER DE CIMENT

(30) Priorität: 20.05.2011 AT 7332011
(43) Veröffentlichungstag der Anmeldung: 26.03.2014
(73) Patentinhaber: Scheuch GmbH, 4971 Aurolzmünster (AT)
(72) Erfinder: STEINWANDTER, Andreas, A-4910 Ried im Innkreis (AT); LISBERGER, Manfred, A-4752 Riedau (AT)
(74) Vertreter: Sonn & Partner Patentanwälte
(86) Internationale Anmeldenummer: PCT/AT2012/000138
(87) Internationale Veröffentlichungsnummer: WO 2012/159137

(56) Entgegenhaltungen:
- EP-A1- 0 519 225
- WO-A1-2011/018409
- JP-A- 2007 015 875
- US-A1- 2009 193 968

## Beschreibung

Die Erfindung betrifft ein Verfahren zur Abscheidung von Quecksilber aus den Abgasen bei der Zementklinkerherstellung, wobei die zur Zementklinkerherstellung benötigten Rohmaterialien im Gegenstromprinzip gegen die Richtung der Abgase in eine Vorwärmstufe aufgegeben und in einem Drehrohrofen gebrannt werden, wobei durch die Aufwärmung der Rohmaterialien in der Vorwärmstufe das in den Rohmaterialien gebundene Quecksilber verdampft wird und die in einem Hauptstrom geführten Abgase vor dem Austritt in die Atmosphäre zumindest teilweise zur Mahltrocknung der Rohmaterialien in zumindest einer Rohmehlmühle verwendet werden und in zumindest einer Filterstufe entstaubt werden, und der in der zumindest einen Filterstufe abgeschiedene Staub zumindest teilweise gemeinsam mit dem gemahlenen Rohmaterial in der Vorwärmstufe aufgegeben wird, sodass zwischen der Vorwärmstufe und der Rohmehlmühle bzw. der zumindest einen Filterstufe ein Kreislauf für das Quecksilber in den Abgasen gebildet wird.

Weiters betrifft die Erfindung eine Vorrichtung zur Abscheidung von Quecksilber aus den Abgasen bei der Zementklinkerherstellung, mit einer Vorwärmstufe, einer Aufgabe für die zur Zementklinkerherstellung benötigten Rohmaterialien im Gegenstromprinzip gegen die Richtung der Abgase in der Vorwärmstufe, einen Drehrohrofen zum Brennen der Rohmaterialien, zumindest einer Filterstufe zum Entstauben der in einem Hauptstrom geführten Abgase vor dem Austritt in die Atmosphäre, und zumindest einer Rohmehlmühle zur zumindest teilweisen Mahltrocknung der Rohmaterialien, wobei zwischen der Vorwärmstufe und der Rohmehlmühle bzw. der zumindest einen Filterstufe ein Kreislauf für das Quecksilber in den Abgasen gebildet ist.

Ein solches Verfahren bzw. eine solche Vorrichtung sind aus der JP 2007/015875 bekannt.

Bei der Zementklinkerherstellung werden verschiedene Rohmaterialien, wie zum Beispiel Kalkstein und Ton, in einem Drehrohrofen gebrannt. In vielen der eingesetzten Rohmaterialien ist Quecksilber enthalten, welches beim Aufheizen in der Vorwärmstufe verdampft und bei der Abkühlung der Abgase wieder am Staub gebunden wird. Der Großteil des Quecksilbers wird mit dem in einer Filterstufe abgeschiedenen Staub wieder dem Zementklinkerherstellungsprozess zugeführt, nur ein kleiner Anteil entweicht mit dem Abgas in die Atmosphäre. Die Quecksilberfracht wird dabei vorwiegend über die Rohmaterialien in dem Prozess eingetragen, ein Anteil des Quecksilbereintrags kann auch über die Brennstoffe erfolgen.

Die vorliegende Patentanmeldung ist hauptsächlich auf die Zementklinkerherstellung gerichtet, kann aber auch bei anderen thermischen Produktionsverfahren zum Einsatz kommen, bei denen ein ausgeprägtes Kreislaufverhalten einiger Abgasschadstoffe beobachtet wird.

Grundsätzlich besteht die Möglichkeit, das in den Rohmaterialien vorkommende Quecksilber bereits vor der Verwendung für die Zementklinkerherstellung zu entfernen bzw. zu reduzieren. Dies erfolgt beispielsweise durch eine Aufbereitung der Rohmaterialien mit heißen Gasen, wodurch das enthaltene Quecksilber zumindest teilweise verdampft und anschließend in konzentrierter Form abgeschieden werden kann. Durch das erforderliche Aufwärmen der Rohmaterialien ist jedoch relativ viel Energie erforderlich, was die Gesamtkosten erhöht und das Verfahren bei hohen Materialdurchsätzen unwirtschaftlich macht.

Auch Lösungen, bei welchen der gesamte Abgasstrom des Drehrohrofens bei der Zementklinkerherstellung mit Hilfe bestimmter Abgasreinigungsverfahren zur Quecksilberabscheidung, wie zum Beispiel Aktivkohlefilter, gereinigt wird, sind aufgrund der großen Luftmengen und somit erforderlichen Anlagengröße wirtschaftlich nicht akzeptabel.

Aufgabe der vorliegenden Erfindung ist daher die Schaffung eines oben genannten Verfahrens und einer oben genannten Vorrichtung zur Abscheidung von Quecksilber aus den Abgasen bei der Zementklinkerherstellung, durch welche eine ausreichend hohe Reduktion der Quecksilber-Emissionen ermöglicht wird. Weiters soll möglichst wenig zusätzliche Energie und ein möglichst geringer zu reinigender Abgasvolumenstrom benötigt werden und somit der Betrieb und die Installation möglichst kostengünstig sein.

In verfahrensmäßiger Hinsicht wird diese Aufgabe dadurch gelöst, dass aus dem Hauptstrom der Abgase ein Teilstrom von 1 bis 30, insbesondere 5 bis 20 Volumsprozent der mindestens 300°C warmen Abgase abgezweigt wird, und die Abgase dieses Teilstroms zuerst entstaubt und danach dessen Quecksilber abgeschieden wird. Erfindungsgemäß ist also vorgesehen, dass nur ein geringer Anteil des Hauptstroms der Abgase abgezweigt und einer zumindest teilweisen Entstaubung und nachfolgenden Quecksilber-Abscheidung zugeführt wird. Wesentlich dabei ist weiters, dass diese Abzweigung des Teilstroms der Abgase in einem Bereich des Prozesses stattfindet, in dem zumindest ein Großteil des im Kreislauf geführten Quecksilbers in gasförmiger Form vorliegt. Dies ist bei Temperaturen ab ca. 300°C der Fall, da Quecksilber und seine Verbindungen relativ niedrige Siedetemperaturen besitzen. Untersuchungen zeigen, dass im oberen Bereich der Vorwärmstufe bei Temperaturen zwischen 300 und 450°C mindestens 80 % des Quecksilbers gasförmig (oxidiert oder elementar) vorliegen. Je höher der Anteil an gasförmigem Quecksilber, umso geringere Abgasmengen müssen im Teilstrom behandelt werden, um den Hauptabgasstrom in gleichem Maße zu entlasten. Dadurch, dass nur ein Teil der gesamten bei der Zementklinkerherstellung anfallenden Abgasmenge behandelt werden muss, können die dafür vorgesehenen Filterstufen und Einrichtungen zur Abscheidung des Quecksilbers kleiner ausgeführt werden und benötigen im Betrieb somit weniger Energie. Insbesondere bei Abscheidegraden von beispielsweise 20-80 % wird das gegenständliche Verfahren und die gegenständliche Vorrichtung besonders kostengünstig ausführbar sein. Im Teilstrom der Abgase sind somit zumindest eine Hochtemperatur-Staubabscheidung und zumindest eine Quecksilberabscheidung enthalten.

Von Vorteil ist es, wenn die Temperatur der Abgase des Teilstroms vor der Abscheidung des Quecksilbers abgesenkt wird. Die Temperaturabsenkung kann beispielsweise in einem Quench durch Wassereindüsung erfolgen. Die Temperaturabsenkung kann auch gleich mit der Quecksilber-Abscheidung kombiniert sein.

Gemäß einem weiteren Merkmal der Erfindung ist vorgesehen, dass der im Teilstrom abgeschiedene Staub aus energetischen Gründen wieder in die Vorwärmstufe rückgeführt wird.

Vorteilhafterweise werden die Abgase des Teilstroms auch wieder in den Hauptstrom der Abgase rückgeführt. Somit erfolgt die Quecksilberabscheidung in einem Bypass des Hauptstroms der Abgase, in dem nur ein Teilstrom der Abgase geführt wird.

Zur Verbesserung der Energiebilanz des Verfahrens kann die Wärme der Abgase des Teilstroms vorzugsweise nach dem Entstauben rückgewonnen und die rückgewonnene Wärme dem gereinigten Teilstrom vor der Rückführung in den Hauptstrom der Abgase zugeführt werden. Die Rückgewinnung der Wärme kann über herkömmliche Wärmetauscher oder dergleichen erfolgen. Alternativ kann die rückgewonnene Wärme auch an einer anderen Stelle eingesetzt oder zur Stromerzeugung genutzt werden.

Der Teilstrom der Abgase wird, in Strömungsrichtung der Abgase gesehen, vorzugsweise nach oder in der Vorwärmstufe aus dem Hauptstrom der Abgase abgezweigt. In der Vorwärmstufe bzw. in Strömungsrichtung der Abgase gesehen hinter der Vorwärmstufe weisen die Abgase in der Regel eine Temperatur über 300°C auf, sodass gewährleistet werden kann, dass ein Großteil der im System befindlichen Quecksilberfracht gasförmig vorliegt.

Dem abgezweigten Teilstrom der Abgase kann zumindest ein Teil des Staubes der Abgase, welcher in der zumindest einen Filterstufe abgeschieden wird, zugegeben werden.

Zur Abscheidung des Quecksilbers im Teilstrom der Abgase kann ein Schlauchfilter verwendet werden. Durch entsprechende Temperaturabsenkung wird das ursprünglich zum größten Teil gasförmig vorliegende Quecksilber kondensiert und die entstandenen Partikel vom Filtermaterial des Schlauchfilters abgeschieden werden können. Die Partikel mit dem darin gebundenen Quecksilber werden in regelmäßigen Abständen aus dem Schlauchfilter ausgetragen und deponiert oder wieder dem Zementklinkerherstellungsprozess zugeführt.

Die Abscheiderate des Schlauchfilters kann dadurch verbessert werden, dass zumindest ein Additiv, wie zum Beispiel ein Reaktionsmittel (z.B. Polysulfide, Bromide) zur Änderung der physikalischen Eigenschaften des Quecksilbers oder adsorbierende Substanzen (z.B. Aktivkohle) zur Bindung des Quecksilbers, zugegeben wird.

Alternativ zum Schlauchfilter kann das Quecksilber auch mit Hilfe eines Wäschers aus den Abgasen des Teilstroms abgeschieden werden, wobei als Waschflüssigkeit insbesondere Metallsulfidlösungen, Kalksteinsuspensionen oder saure Wäscher in Kombination mit organisulfidischen Fällungsmitteln eingesetzt werden, sodass das Quecksilber nach einer Behandlung des Abwassers des Wäschers konzentriert wird. Insbesondere wenn das abgeschiedene Quecksilber deponiert werden muss, ist es von Vorteil, wenn es durch das Scheideverfahren entsprechend hoch konzentriert wird.

Alternativ zu den oben beschriebenen Methoden kann das Quecksilber auch mit Hilfe eines Fest- oder Wanderbettadsorbers aus den Abgasen des Teilstroms abgeschieden werden. Mit einem Wanderbettadsorber sind prinzipiell höhere Abscheidegrade erzielbar und die Ausnutzung der eingesetzten Sorptionsmittel höher als bei Flugstromprozessen.

Von besonderem Vorteil ist es, wenn gemäß einem weiteren Merkmal der vorliegenden Erfindung die Konzentration des Quecksilbers im Hauptstrom der Abgase erhöht wird. Durch die Konzentrationserhöhung des Quecksilbers im Hauptstrom wird in der Folge auch die Quecksilberkonzentration im Teilstrom erhöht, wodurch die erzielbaren Abscheideraten der Teilstromreinigung entsprechend gesteigert werden können. Die Steigerung der Quecksilberkonzentration im Hauptstrom kann auf verschiedene Arten erfolgen.

Beispielsweise kann die Konzentration des Quecksilbers im Hauptstrom der Abgase dadurch erhöht werden, dass die zumindest eine Filterstufe im Hauptstrom der Abgase zur Abscheidung von Quecksilber optimiert wird und das in der zumindest einen Filterstufe abgeschiedene Quecksilber zumindest teilweise der Vorwärmstufe zugeführt wird. Somit wird der Massenstrom des im Kreislauf geführten Quecksilbers entsprechend erhöht.

Eine Verbesserung der Quecksilberabscheidung in der zumindest einen Filterstufe des Hauptstroms der Abgase kann dadurch erzielt werden, dass Additive, wie zum Beispiel Bromide, Chloride oder Aktivkohle, an geeigneter Stelle im Abgasweg des Drehrohrofens zugegeben werden. Derartige Additive verändern die Modifikation des Quecksilbers oder binden das Quecksilber und wirken sich somit besonders günstig auf die Abscheidung des Quecksilbers in der zumindest einen Filterstufe aus.

Eine weitere Verbesserung der Quecksilberabscheidung in der zumindest einen Filterstufe des Hauptstroms der Abgase kann durch Absenkung der Temperatur vor der zumindest einen Filterstufe erzielt werden. Dabei eignen sich Wärmetauscher oder Verdampfungskühler zur Absenkung der Temperatur auf 60°C bis 140°C, vorzugsweise 80°C bis 120°C, besonders. Durch den reduzierten Dampfdruck kann die Abscheidung des Quecksilbers in der zumindest einen Filterstufe erhöht werden.

Weitere Verbesserungen können dadurch erzielt werden, dass die Quecksilberabscheidung in der zumindest einen Filterstufe des Hauptstroms der Abgase durch einen zwischen der Vorwärmstufe und der Rohmehlmühle bzw. der zumindest einen Filterstufe angeordneten Katalysator, der die chemische Bindung des Quecksilbers verändert, erhöht wird. In derartigen Katalysatoren (z.B. Wolfram- und Vanadiumkatalysatoren) wird das Quecksilber oxidiert.

Verbesserungen werden dadurch erzielt, dass vor dem Katalysator ein Reaktionsmittel zur Veränderung der chemischen Bindung des Quecksilbers zugegeben wird. Dafür eignen sich vor allem Bromide oder Chloride besonders.

Gelöst wird die erfindungsgemäße Aufgabe auch durch eine oben genannte Vorrichtung zur Abscheidung von Quecksilber aus den Abgasen bei der Zementklinkerherstellung, wobei in einem Bereich des Hauptstroms der Abgase, in dem die Abgase eine Temperatur von mindestens 300°C aufweisen, eine Abzweigung eines Teilstroms von 1 bis 30, insbesondere 5 bis 20 Volumsprozent der Abgase vorgesehen ist, wobei im Teilstrom zumindest ein Abscheider zur Entstaubung der Abgase des Teilstroms und danach zumindest eine Stufe zur Abscheidung des Quecksilbers aus den Abgasen des Teilstroms angeordnet ist. Zu den möglichen Ausführungsformen und Vorteilen der erfindungsgemäßen Vorrichtung wird auf die obige Beschreibung des Verfahrens zur Abscheidung von Quecksilber aus den Abgasen bei der Zementklinkerherstellung verwiesen.

Die vorliegende Erfindung wird anhand der beigefügten Zeichnungen näher erläutert.

Darin zeigen
Fig. 1 ein Blockschaltbild einer Vorrichtung zur Zementklinkerherstellung gemäß dem Stand der Technik;
Fig. 2 ein Blockschaltbild einer Vorrichtung zur Zementklinkerherstellung mit einer Ausführungsform des Verfahrens zur Quecksilberabscheidung; und
Fig. 3 ein Blockschaltbild einer Vorrichtung zur Zementklinkerherstellung mit einer weiteren Ausführungsform eines Verfahrens zur Quecksilberabscheidung.

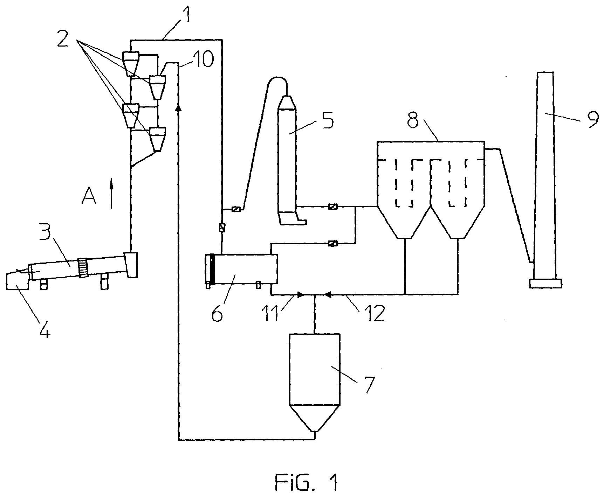

Fig. 1 zeigt ein Blockschaltbild einer Vorrichtung zur Zementklinkerherstellung gemäß dem Stand der Technik. Das für die Zementklinkerherstellung benötigte Rohmaterial 10 wird im Gegenstromprinzip, d.h. gegen die Richtung A der Abgase 1, in eine Vorwärmstufe 2, welche üblicherweise aus mehreren übereinander angeordneten Zyklonen besteht, aufgegeben. Das entsprechend vorgewärmte Rohmaterial 10 gelangt von der Vorwärmstufe 2 in den Drehrohrofen 3, wo das Material zu Zementklinker gebrannt wird. Über eine entsprechende Kühl- und Austragseinrichtung 4 wird der Zementklinker ausgetragen und in entsprechende Silos (nicht dargestellt) gefördert. Vor Austritt der Abgase in die Atmosphäre werden diese zumindest teilweise in einer Rohmehlmühle 6 einer Mahltrocknung zugeführt oder in einer Kühleinrichtung 5, wie zum Beispiel einem Verdampfungskühler, abgekühlt und in einer Filterstufe 8 entstaubt. Danach gelangen die Abgase 1 über einen Schlot 9 in die Atmosphäre. Der abgeschiedene Staub 12 aus der Filterstufe 8 und das gemahlene Rohmaterial 11 aus der Rohmehlmühle 6 werden in einem Silo 7 vermischt und gemeinsam als Rohmaterial 10 in die Vorwärmstufe 2 aufgegeben. Durch die Art der Gegenstromführung von Material und Abgasstrom wird zwischen der Vorwärmstufe 2 und der Rohmehlmühle 6 bzw. der zumindest einen Filterstufe 8 durch die Materialrückführung ein Kreislauf für das in den Abgasen 1 enthaltene Quecksilber gebildet. Der Quecksilbermassenstrom, welcher im Kreislauf geführt wird, beträgt dabei ein Vielfaches des Quecksilber-Input-Massenstroms aus den frischen Rohmaterialien 10 und Brennstoffen.

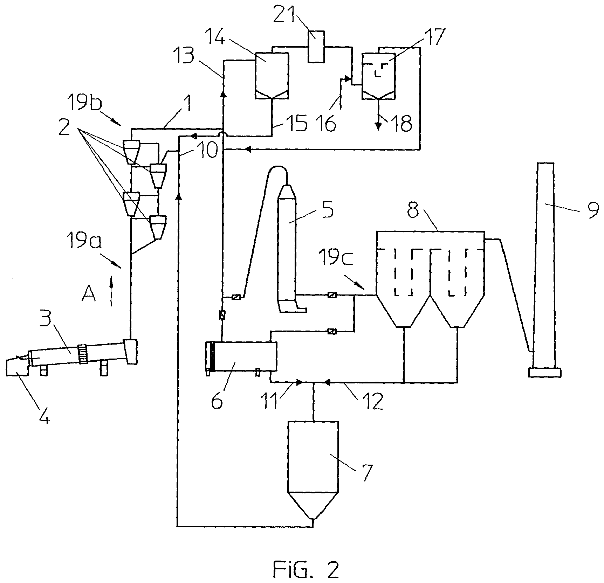

Fig. 2 zeigt das Blockschaltbild einer möglichen Installation einer Ausführungsform des Verfahrens zur Abscheidung von Quecksilber aus den Abgasen bei der Zementklinkerherstellung mit einer Optimierung der Filterstufe 8 im Zementherstellungsprozess aus Fig. 1. Erfindungsgemäß wird ein Teilstrom 13 aus den Abgasen 1 abgezogen. Im dargestellten Beispiel erfolgt die Abzweigung des Teilstroms 13 der Abgase 1 nach der Vorwärmstufe 2. Der Teilstrom 13 der Abgase 1 wird in einem Abscheider 14 zumindest teilweise entstaubt und der abgeschiedene Staub 15 in der gezeigten Ausführungsvariante in die Vorwärmstufe 2 rückgeführt. Dem Teilstrom 13 werden nach dem Durchströmen eines Kühlers 21 anschließend Additive 16 zugegeben und das Quecksilber in einer Abscheidestufe 17, welche beispielsweise als Schlauchfilter ausgebildet ist, abgeschieden. Die an der Abscheidestufe 17 abgeschiedenen Schadstoffe werden über die Leitung 18 aus dem System ausgetragen. Die Abscheidung des Quecksilbers im Hauptstrom der Abgase 1 in der Filterstufe 8 kann durch Zugabe von Additiven an unterschiedlichen Stellen 19a (z.B. Bromide), 19b (z.B. Sulfide), 19c (z.B. Aktivkohle), je nach benötigter Reaktions- oder Adsorptions-Temperatur, verbessert werden.

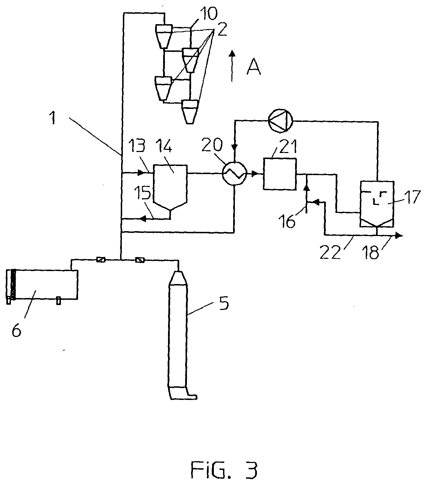

In Fig. 3 wird eine weitere Ausführungsvariante der Abscheidung von Quecksilber aus den Abgasen 1 bei der Zementklinkerherstellung gezeigt. Der Teilstrom 13 wird nach der Vorwärmstufe 2 aus den Abgasen 1 bei einer Temperatur von über 300°C abgezogen und im Abscheider 14 bei Temperaturen über 300°C entstaubt. Der abgeschiedene Staub 15 wird wieder der Vorwärmstufe 2 zugeführt. Der zumindest teilweise entstaubte Teilstrom 13 der Abgase 1 wird über einen Wärmetauscher 20 mit dem gereinigten Teilstrom 13 gekühlt und im Kühler 21 auf eine Temperatur von 60 bis 200°C, vorzugsweise 80 bis 140°C, abgekühlt. Dem gekühlten Teilstrom 13 werden Additive 16 (z.B. Aktivkohle) zugegeben, die das Quecksilber chemisch oder physikalisch binden. Das nunmehr an Partikeln gebundene Quecksilber wird an der Abscheidestufe 17, beispielsweise einem Schlauchfilter, abgeschieden. Das Gemisch aus teilweise unverbrauchten Additiven 16 und abgeschiedenem Quecksilber kann zumindest teilweise über die Verbindungsleitung 22 in den ungereinigten Teilstrom 13 der Abgase 1 rückgeführt oder über die Leitung 18 aus dem System ausgetragen werden. Der gereinigte Teilstrom 13 wird über den Wärmetauscher 20 wieder aufgewärmt und in die Leitung der Abgase 1 rückgeführt.

Der Kern des vorliegenden Verfahrens und der Vorrichtung besteht darin, dass lediglich ein Teil der Abgase 1 behandelt wird, um die Quecksilberemissionen in die Atmosphäre zu reduzieren. Durch die Kombination der Erhöhung der Quecksilberkonzentration in den im Kreislauf geführten Staub- und Materialströmen beim Zementklinkerherstellungsprozess und die Behandlung eines Teilstroms der Abgase können relativ gute Abscheideraten, beispielsweise von 20 bis 80 % bei gleichzeitig niedrigen Anschaffungs- und Betriebskosten erzielt werden.

Die Vorteile des erfindungsgemäßen Verfahrens und der erfindungsgemäßen Vorrichtung bestehen darin, dass bestehende Anlagen relativ leicht umgerüstet werden können, und eine gute Energiebilanz erzielbar ist. Insbesondere während des Betriebs ist das Verfahren und die Vorrichtung wesentlich kostengünstiger als bisher bekannte und eingesetzte Verfahren.

## Patentansprüche

1. Verfahren zur Abscheidung von Quecksilber aus den Abgasen (1) bei der Zementklinkerherstellung, wobei die zur Zementklinkerherstellung benötigten Rohmaterialien (10) im Gegenstromprinzip gegen die Richtung (A) der Abgase (1) in eine Vorwärmstufe (2) aufgegeben und in einem Drehrohrofen (3) gebrannt werden, wobei durch die Aufwärmung der Rohmaterialien (10) in der Vorwärmstufe (2) das in den Rohmaterialien (10) gebundene Quecksilber verdampft wird und die in einem Hauptstrom geführten Abgase (1) vor dem Austritt in die Atmosphäre zumindest teilweise zur Mahltrocknung der Rohmaterialien (10) in zumindest einer Rohmehlmühle (6) verwendet und in zumindest einer Filterstufe (8) entstaubt werden, und der in der zumindest einen Filterstufe (8) abgeschiedene Staub (12) zumindest teilweise gemeinsam mit dem gemahlenen Rohmaterial (11) in der Vorwärmstufe (2) aufgegeben wird, sodass zwischen der Vorwärmstufe (2) und der Rohmehlmühle (6) bzw. der zumindest einen Filterstufe (8) ein Kreislauf für das Quecksilber in den Abgasen (1) gebildet wird, **dadurch gekennzeichnet, dass** aus dem Hauptstrom der Abgase (1) ein Teilstrom (13) von 1 bis 30, insbesondere 5 bis 20 Volumenprozent der mindestens 300°C warmen Abgase (1) abgezweigt wird, und die Abgase (1) dieses Teilstroms (13) zuerst entstaubt und danach dessen Quecksilber abgeschieden wird.

2. Verfahren nach Anspruch 1, **dadurch gekennzeichnet, dass** die Temperatur der Abgase (1) des Teilstroms (13) vor der Abscheidung des Quecksilbers abgesenkt und/oder der im Teilstrom (13) abgeschiedene Staub wieder in die Vorwärmstufe (2) rückgeführt wird und/oder die Abgase (1) des Teilstroms (13) wieder in den Hauptstrom der Abgase (1) rückgeführt werden.

3. Verfahren nach Anspruch 1 oder 2, **dadurch gekennzeichnet, dass** die Wärme der Abgase (1) des Teilstroms (13) vorzugsweise nach dem Entstauben rückgewonnen wird.

4. Verfahren nach einem der Ansprüche 1 bis 3, **dadurch gekennzeichnet, dass** der Teilstrom (13) der Abgase (1), in Strömungsrichtung (A) der Abgase (1) gesehen, nach oder in der Vorwärmstufe (2) aus dem Hauptstrom der Abgase (1) abgezweigt wird.

5. Verfahren nach einem der Ansprüche 1 bis 4, **dadurch gekennzeichnet, dass** dem abgezweigten Teilstrom (13) der Abgase (1) zumindest ein Teil des Staubes (12) der Abgase (1), welcher in der zumindest einen Filterstufe (8) abgeschieden wird, zugegeben wird.

6. Verfahren nach einem der Ansprüche 1 bis 5, **dadurch gekennzeichnet, dass** das Quecksilber mit Hilfe eines Schlauchfilters aus den Abgasen (1) des Teilstroms (13) abgeschieden wird, wobei vor der Quecksilberabscheidung bevorzugt ein Additiv (16), beispielsweise ein Reaktionsmittel zur Änderung der physkalischen Eigenschaften des Quecksilbers oder adsorbierende Substanzen zur Bindung des Quecksilbers, zugegeben wird.

7. Verfahren nach einem der Ansprüche 1 bis 5, **dadurch gekennzeichnet, dass** das Quecksilber mit Hilfe eines Wäschers oder eines Fest- oder Wanderbettadsorbers aus den Abgasen (1) des Teilstroms (13) abgeschieden wird.

8. Verfahren nach einem der Ansprüche 1 bis 7, **dadurch gekennzeichnet, dass** die Konzentration des Quecksilbers im Hauptstrom der Abgase (1) erhöht wird.

9. Verfahren nach Anspruch 8, **dadurch gekennzeichnet, dass** die Konzentration des Quecksilbers im Hauptstrom der Abgase (1) dadurch erhöht wird, dass die zumindest eine Filterstufe (8) im Hauptstrom der Abgase (1) zur Abscheidung von Quecksilber optimiert wird und das in der zumindest einen Filterstufe (8) abgeschiedene Quecksilber zumindest teilweise der Vorwärmstufe (2) zugeführt wird.

10. Verfahren nach Anspruch 9, **dadurch gekennzeichnet, dass** die Quecksilber-Abscheidung in der zumindest einen Filterstufe (8) des Hauptstroms der Abgase (1) durch Zugabe von Additiven, wie zum Beispiel Bromiden, Chloriden oder Aktivkohle, oder durch Absenkung der Temperatur vor der zumindest einen Filterstufe (8) oder durch einen zwischen der Vorwärmstufe (2) und der Rohmehlmühle (6) bzw. der zumindest einen Filterstufe (8) angeordneten Katalysator, der die chemische Bindung des Quecksilbers verändert, erhöht wird, wobei bevorzugt vor dem Katalysator ein Reaktionsmittel zur Veränderung der chemischen Bindung des Quecksilbers zugegeben wird.

11. Vorrichtung zur Abscheidung von Quecksilber aus den Abgasen (1) bei der Zementklinkerherstellung, mit einer Vorwärmstufe (2), einer Aufgabe für die zur Zementklinkerherstellung benötigten Rohmaterialien (10) im Gegenstromprinzip gegen die Richtung (A) der Abgase (1) in der Vorwärmstufe (2), einem Drehrohrofen (3) zum Brennen der Rohmaterialien (10), zumindest einer Filterstufe (8) zum Entstauben der in einem Hauptstrom geführten Abgase (1) vor dem Austritt in die Atmosphäre, und zumindest einer Rohmehlmühle (6) zur zumindest teilweisen Mahltrocknung der Rohmaterialien (10), wobei zwischen der Vorwärmstufe (2) und der Rohmehlmühle (6) bzw. der zumindest einen Filterstufe (8) ein Kreislauf für das Quecksilber in den Abgasen (1) gebildet ist, **dadurch gekennzeichnet, dass** in einem Bereich des Hauptstroms der Abgase (1), in dem die Abgase (1) eine Temperatur von mindestens 300°C aufweisen, eine Abzweigung eines Teilstroms (13) von 1 bis 30, insbesondere 5 bis 20 Volumenprozent der Abgase (1) vorgesehen ist, wobei im Teilstrom (13) zumindest ein Abscheider (14) zur Entstaubung der Abgase (1) des Teilstroms (13) und danach zumindest eine Stufe (17) zur Abscheidung des Quecksilbers aus den Abgasen (1) des Teilstroms (13) angeordnet ist.

12. Vorrichtung nach Anspruch 11, **dadurch gekennzeichnet, dass** eine Einrichtung zur Erhöhung der Konzentration des Quecksilbers im Hauptstrom der Abgase (1) vorgesehen ist.

13. Vorrichtung nach Anspruch 12, **dadurch gekennzeichnet, dass** die zumindest eine Filterstufe (8) im Hauptstrom der Abgase (1) zur Quecksilber-Abscheidung optimiert ist und das abgeschiedene Quecksilber zumindest teilweise der Vorwärmstufe (2) zuführbar ist.

14. Vorrichtung nach Anspruch 13, **dadurch gekennzeichnet, dass** zumindest eine Zuleitung (19a, 19b, 19c) zur Zugabe von Additiven, wie zum Beispiel Bromiden, Chloriden oder Aktivkohle, vorgesehen ist oder dass vor der zumindest einen Filterstufe (8) des Hauptstroms der Abgase (1) eine Einrichtung zur Absenkung der Temperatur der Abgase angeordnet ist.

15. Vorrichtung nach Anspruch 12, **dadurch gekennzeichnet, dass** im Hauptstrom der Abgase (1) zwischen der Vorwärmstufe (2) und der Rohmehlmühle (6) bzw. der zumindest einen Filterstufe (8) ein Katalysator zur Veränderung der chemischen Bindung des Quecksilbers vorgesehen ist, wobei bevorzugt vor dem Katalysator eine Zuleitung für ein Reaktionsmittel zur Veränderung der chemischen Bindung des Quecksilbers angeordnet ist.

## Claims

1. A method for separating mercury from the exhaust gases (1) during the production of cement clinker, wherein the raw materials (10) required for the production of cement clinker are fed into a pre-heating stage (2) against the direction (A) of the exhaust gases (1) according to the counter flow principle, and fired in a rotary kiln (3), wherein the mercury bonded in the raw materials (10) is vaporised due to the heating of the raw materials (10) in the pre-heating stage (2) and the exhaust gases (1) conducted in a main flow are used at least partially for mill drying the raw materials (10) in at least one raw mix mill (6) and dedusted in at least one filter stage (8) before their escape to the atmosphere, and the dust (12) separated in the at least one filter stage (8) is fed into the pre-heating stage (2) at least partially together with the milled raw material (11), so a circuit for the mercury in the exhaust gases (1) is formed between the pre-heating stage (2) and the raw mix mill (6) or the at least one filter stage (8), **characterised in that** from the main flow of exhaust gases (1) a sub-flow (13) of 1 to 30, in particular 5 to 20, per cent by volume of the exhaust gases (1) having a temperature of at least 300°C is branched off, and the exhaust gases (1) of this sub-flow (13) are first dedusted and then the mercury contained therein is separated.

2. The method according to claim 1, **characterised in that** the temperature of the exhaust gases (1) of the sub-flow (13) is lowered before the separation of the mercury and/or the dust separated in the sub-flow (13) is recirculated into the pre-heating stage (2) and/or the exhaust gases (1) of the sub-flow (13) are recirculated into the main flow of exhaust gases (1).

3. The method according to any one of claims 1 or 2, **characterised in that** the heat of the exhaust gases (1) of the sub-flow (13) is preferably recovered after the dedusting.

4. The method according to any one of claims 1 to 3, **characterised in that**, seen in the flowing direction (A) of the exhaust gases (1), the sub-flow (13) of exhaust gases (1) is branched off from the main flow of exhaust gases (1) after or in the pre-heating stage (2).

5. The method according to any one of claims 1 to 4, **characterised in that** at least a portion of the dust (12) of the exhaust gases (1) separated in the at least one filter stage (8) is added to the branched-off sub-flow (13) of exhaust gases (1).

6. The method according to any one of claims 1 to 5, **characterised in that** the mercury is separated from the exhaust gases (1) of the sub-flow (13) by means of a bag filter, wherein preferably an additive (16), such as a reactive agent for altering the physical properties of the mercury or adsorbing substances for bonding the mercury, is added before the separation of mercury.

7. The method according to any one of claims 1 to 5, **characterised in that** the mercury is separated from the exhaust gases (1) of the sub-flow (13) by means of a scrubber or a fixed-bed adsorber or a moving-bed adsorber.

8. The method according to any one of claims 1 to 7, **characterised in that** the concentration of the mercury in the main flow of exhaust gases (1) is increased.

9. The method according to claim 8, **characterised in that** the concentration of the mercury in the main flow of exhaust gases (1) is increased by optimising the at least one filter stage (8) in the main flow of exhaust gases (1) for the separation of mercury, and by feeding into the pre-heating stage (2) at least part of the mercury separated in the at least one filter stage (8).

10. The method according to claim 9, **characterised in that** the separation of mercury in the at least one filter stage (8) of the main flow of exhaust gases (1) is improved by adding additives such as bromides, chlorides or activated carbon, or by decreasing the temperature before the at least one filter stage (8), or by means of a catalyser, which is arranged between the pre-heating stage (2) and the raw mix mill (6) or the at least one filter stage (8) and alters the chemical bonding of the mercury, wherein preferably a reactive agent for altering the chemical bonding of the mercury is added before the catalyser.

11. A device for separating mercury from the exhaust gases (1) during the production of cement clinker, comprising a pre-heating stage (2), a feed point for the raw materials (10) required for the production of cement clinker against the direction (A) of the exhaust gases (1) according to the counter flow principle in the pre-heating stage (2), a rotary kiln (3) for firing the raw materials (10), at least one filter stage (8) for dedusting the exhaust gases (1) conducted in a main flow before their escape to the atmosphere, and at least one raw mix mill (6) for at least partially mill drying the raw materials (10), wherein a circuit for the mercury in the exhaust gases (1) is formed between the pre-heating stage (2) and the raw mix mill (6) or the at least one filter stage (8), **characterised in that** a sub-flow (13) of 1 to 30, in particular 5 to 20, per cent by volume of the exhaust gases (1) is branched off in a region of the main flow of exhaust gases (1) where the exhaust gases (1) have a temperature of at least 300°C, wherein at least one separator (14) for dedusting the exhaust gases (1) of the sub-flow (13) and thereafter at least one stage (17) for separating the mercury from the exhaust gases (1) of the sub-flow (13) are arranged in the sub-flow (13).

12. The device according to claim 11, **characterised in that** a feature for increasing the concentration of the mercury in the main flow of exhaust gases (1) is provided.

13. The device according to claim 12, **characterised in that** the at least one filter stage (8) in the main flow of exhaust gases (1) is optimised for the separation of mercury and the separated mercury may be fed, at least partially, into the pre-heating stage (2).

14. The device according to claim 13, **characterised in that** at least one feed line (19a, 19b, 19c) for adding additives, such as bromides, chlorides or activated carbon, is provided, or that a feature for lowering the temperature of the exhaust gases is arranged before the at least one filter stage (8) of the main flow of exhaust gases (1).

15. The device according to claim 12, **characterised in that** in the main flow of exhaust gases (1) a catalyser for altering the chemical bonding of the mercury is provided between the pre-heating stage (2) and the raw mix mill (6) or the at least one filter stage (8), wherein preferably a feed line for a reactive agent for altering the chemical bonding of the mercury is arranged before the catalyser.

## Revendications

1. Procédé pour l'élimination du mercure provenant des gaz d'échappement (1) lors de la fabrication de clinker de ciment, les matières premières (10) nécessaires pour la fabrication du clinker de ciment étant distribuées, selon le principe du contre-courant, à l'encontre de la direction (A) des gaz d'échappement (1), vers un étage de pré-chauffage (2) et étant brûlées dans un four rotatif (3), le chauffage des matières premières (10) dans l'étage de pré-chauffage (2) permettant de faire évaporer le mercure contenu dans les matières premières (10) et les gaz d'échappement (1) guidés dans un flux principal, avant la sortie dans l'atmosphère, sont utilisés au moins partiellement pour le broyage et le séchage des matières premières (10) dans au moins un broyeur d'agrégat brut (6) et étant dépoussiérées dans au moins un étage de filtrage (8) et la poussière (12), éliminée dans l'au moins un étage de filtrage (8) étant transportée au moins partiellement conjointement avec la matière première broyée (11) vers l'étage de pré-chauffage (2), de façon à ce que, entre l'étage de pré-chauffage (2) et le broyeur d'agrégat brut (6) ou l'au moins un étage de filtrage (8), un circuit pour le mercure dans les gaz d'échappement (1) soit formé, **caractérisé en ce que**, à partir du flux principal des gaz d'échappement (1) est dérivé un flux partiel (13) de 1 à 30, plus particulièrement de 5 à 20 % en volume des gaz d'échappement (1) d'au moins 300 °C et les gaz d'échappement (1) de ce flux partiel (13) sont d'abord dépoussiérés puis leur mercure est éliminé.

2. Procédé selon la revendication 1, **caractérisé en ce que** la température des gaz d'échappement (1) du flux partiel (13) est abaissée avant l'élimination du mercure et/ou la poussière éliminée dans le flux partiel (13) est à nouveau retournée vers l'étage de pré-chauffage (2) et/ou les gaz d'échappement (1) du flux partiel (13) sont à nouveau retournés vers le flux principal des gaz d'échappement (1).

3. Procédé selon la revendication 1 ou 2, **caractérisé en ce que** la chaleur des gaz d'échappement (1) du flux partiel (13) est de préférence récupérée après le dépoussiérage.

4. Procédé selon l'une des revendications 1 à 3, **caractérisé en ce que** le flux partiel (13) des gaz d'échappement (1), vu dans la direction d'écoulement (A) des gaz d'échappement (1), est dérivé après ou dans l'étage de pré-chauffage (2) à partir du flux principal des gaz d'échappement (1).

5. Procédé selon l'une des revendications 1 à 4, **caractérisé en ce que**, au flux partiel dérivé (13) des gaz d'échappement (1), est ajoutée au moins une partie de la poussière (12) des gaz d'échappement (1), qui est éliminée dans l'au moins un étage de filtrage (8).

6. Procédé selon l'une des revendications 1 à 5, **caractérisé en ce que** le mercure est éliminé, à l'aide d'un filtre à manche, des gaz d'échappement (1) du flux partiel (13), un additif (16), par exemple un produit de réaction pour la modification des propriétés physiques du mercure ou des substances adsorbantes pour la liaison du mercure, étant ajouté avant l'élimination du mercure.

7. Procédé selon l'une des revendications 1 à 5, **caractérisé en ce que** le mercure est éliminé, à l'aide d'un épurateur ou d'un adsorbeur à lit fixe à lit mobile, des gaz d'échappement (1) du flux partiel (13).

8. Procédé selon l'une des revendications 1 à 7, **caractérisé en ce que** la concentration du mercure dans le flux principal des gaz d'échappement (1) est augmentée.

9. Procédé selon la revendication 8, **caractérisé en ce que** la concentration du mercure dans le flux principal des gaz d'échappement (1) est augmentée en optimisant l'au moins un étage de filtrage (8) dans le flux principal des gaz d'échappement (1) pour l'élimination du mercure et en ajoutant le mercure éliminé dans l'au moins un étage de filtrage (8) au moins partiellement à l'étage de pré-chauffage (2).

10. Procédé selon la revendication 9, **caractérisé en ce que** l'élimination du mercure dans l'au moins un étage de filtrage (8) du flux principal des gaz d'échappement (1) est augmentée par l'ajout d'additifs, comme des bromures, des chlorures ou des charbons actifs, ou par abaissement de la température avant l'au moins un étage de filtrage (8) ou par un catalyseur disposé entre l'étage de pré-chauffage (2) et le broyeur d'agrégat brut (6) ou l'au moins un étage de filtrage (8), qui modifie la liaison chimique du mercure, un produit de réaction pour la modification de la liaison chimique du mercure étant ajouté avant le catalyseur.

11. Dispositif d'élimination du mercure des gaz d'échappement (1) lors de la fabrication de clinker de ciment, avec un étage de pré-chauffage (2), une distribution des matières premières (10) nécessaires pour la fabrication du clinker de ciment, selon le principe du contre-courant, à l'encontre de la direction (A) des gaz d'échappement (1) dans l'étage de pré-chauffage (2), un four rotatif (3) pour la combustion des matières premières (10), au moins un étage de filtrage (8) pour le dépoussiérage des gaz d'échappement (1) guidés dans un flux principal avant la sortie dans l'atmosphère et au moins un broyeur d'agrégat brut (6) pour broyage et le séchage au moins partiel des matières premières (10), un circuit pour le mercure dans les gaz d'échappement (1) étant formé entre l'étage de pré-chauffage (2) et le broyeur d'agrégat brut (6) ou l'au moins un étage de filtrage (8), **caractérisé en ce que**, dans une zone du flux principal des gaz d'échappement (1), dans lequel les gaz d'échappement (1) présentent une température d'au moins 300 °C, une dérivation d'un flux partiel (13) de 1 à 30, plus particulièrement de 5 à 20 % en volume des gaz d'échappement (1) étant prévue, au moins un séparateur (14) étant disposé dans le flux partiel (13) pour le dépoussiérage des gaz d'échappement (1) du flux partiel (13) puis au moins un étage (17) pour l'élimination du mercure des gaz d'échappement (1) du flux partiel (13).

12. Dispositif selon la revendication 11, **caractérisé en ce qu'**un dispositif pour l'augmentation de la concentration du mercure dans le flux principal des gaz d'échappement (1) est prévu.

13. Dispositif selon la revendication 12, **caractérisé en ce que** l'au moins un étage de filtrage (8) est optimisé dans le flux principal des gaz d'échappement (1) pour l'élimination du mercure et le mercure éliminé peut être introduit au partiellement dans l'étage de pré-chauffage (2).

14. Dispositif selon la revendication 13, **caractérisé en ce qu'**au moins une conduite d'alimentation (19a, 19b, 19c), pour l'ajout d'additifs, comme des bromures, des chlorures ou des charbons actifs, est prévue ou **en ce que**, avant l'au moins un étage de filtrage (8) du flux principal des gaz d'échappement (1) se trouve un dispositif pour l'abaissement de la température des gaz d'échappement.

15. Dispositif selon la revendication 12, **caractérisé en ce que**, dans le flux principal des gaz d'échappement (1), entre l'étage de pré-chauffage (2) et le broyeur d'agrégat brut (6) ou l'au moins un étage de filtrage (8), se trouve un catalyseur pour la modification de la liaison chimique du mercure, une conduite d'alimentation étant disposée de préférence avant le catalyseur pour un produit de réaction pour la modification de la liaison chimique du mercure.
